# FASCICULE DE BREVET EUROPEEN

(11) **EP 2 649 688 B1**
(45) Date de publication et mention de la délivrance du brevet: **27.08.2014**
(21) Numéro de dépôt: 11799796.5
(22) Date de dépôt: 29.11.2011
(51) Int. Cl.: H01S 3/067, H01S 3/082, H01S 3/108, H01S 3/23, H01S 3/13

(54) **PROCÉDÉ ET OSCILLATEUR LASER POUR LA GÉNÉRATION D'UN FAISCEAU LASER**
VERFAHREN UND LASEROSZILLATOR ZUR ERZEUGUNG EINES LASERSTRAHLS
METHOD AND LASER OSCILLATOR FOR THE GENERATION OF A LASER BEAM

(30) Priorité: 06.12.2010 FR 1004747
(43) Date de publication de la demande: 16.10.2013
(73) Titulaire: Compagnie Industrielle des Lasers Cilas, 45100 Orleans (FR)
(72) Inventeur: SABOURDY, David, F-45000 Orleans (FR); MONTAGNE, Jean-Eucher, F-45000 Orleans (FR); BARTHELEMY, Alain, F-87100 Limoges (FR); DESFARGES-BERTHELEMOT, Agnès, F-87270 Couzeix (FR); KERMENE, Vincent, F-87700 Aixe Sur Vienne (FR); GUILLOT, Julien, F-87500 Ladignac Le Long (FR); SERREAULT, Brigitte, F-92330 Sceaux (FR); ESMILLER, Bruno, F-78670 Villennes Sur Seine (FR)
(74) Mandataire: Hauer, Bernard
(86) Numéro de dépôt international: PCT/FR2011/052815
(87) Numéro de publication internationale: WO 2012/076785

(56) Documents cités:
- EP-A2- 1 041 686
- US-A1- 2005 169 323
- US-A1- 2006 132 903
- US-A1- 2006 171 428
- US-A1- 2007 201 795
- EHLERT J C ET AL: "AUTOMATED PHASE SENSING AND CONTROL OF AN EXTERNAL TALBOT CAVITY LASER WITH PHASE-CONTRAST IMAGING", APPLIED OPTICS, vol. 33, no. 24, 20 août 1994 (1994-08-20) , pages 5550-5556, XP000464032, OPTICAL SOCIETY OF AMERICA, US ISSN: 0003-6935, DOI: 10.1364/AO.33.005550
- SANDERS S ET AL: "Phase locking of a two-dimensional semiconductor laser array in an external Talbot cavity", LASER DIODE TECHNOLOGY AND APPLICATIONS VI. 25-27 JAN. 1994 LOS ANGELES, CA, USA, vol. 2148, 1994, pages 72-79, XP002637087, Proceedings of the SPIE - The International Society for Optical Engineering USA ISSN: 0277-786X
- FOTIADI A A ET AL: "All-fiber coherent combining of Er-doped amplifiers through refractive index control in Yb-doped fibers", OPTICS LETTERS, vol. 34, no. 22, 15 novembre 2009 (2009-11-15), pages 3574-3576, XP001550146, OSA, OPTICAL SOCIETY OF AMERICA, WASHINGTON, DC, US ISSN: 0146-9592, DOI: 10.1364/OL.34.003574

## Description

La présente invention concerne un procédé et un oscillateur laser pour la génération d'un faisceau laser.

Quoique non exclusivement, ce procédé est particulièrement bien adapté à la génération autonome (c'est-à-dire sans injection préalable d'un faisceau d'initiation) d'un faisceau laser.

On sait que, pour générer un faisceau laser de puissance élevée, il est connu de générer, dans un premier temps, une pluralité de faisceaux laser élémentaires, puis de rassembler les faisceaux ainsi générés pour qu'ils se combinent de façon cohérente en un unique point de focalisation et forment ainsi un unique faisceau laser dont la puissance est d'autant plus grande que le nombre de faisceaux élémentaires est plus élevé.

Toutefois, afin que la puissance du faisceau laser résultant soit optimale, il importe que les faisceaux laser élémentaires présentent tous la même fréquence d'émission et la même phase.

Une solution connue pour y parvenir est décrite par exemple dans le document US 6,366,356. Elle consiste à générer tout d'abord un faisceau laser « maître » à partir d'un oscillateur laser, puis à multiplexer spatialement, en sortie de cet oscillateur, le faisceau laser maître en une pluralité de faisceaux laser élémentaires. Ces faisceaux élémentaires sont amplifiés séparément, en parallèle, par autant d'amplificateurs optiques, puis leurs phases sont ajustées. Ces faisceaux élémentaires ainsi mis en phase sont finalement recombinés pour former un unique faisceau laser dont la puissance est plus élevée que celle du faisceau laser maître. Lors de cette recombinaison, puisque tous les faisceaux laser élémentaires sont issus d'un même faisceau maître, ils présentent de fait la même fréquence d'émission et la même puissance. De plus, par l'ajustement de la phase de chaque faisceau laser élémentaire ceux-ci sont également en phase.

Cette solution présente toutefois l'inconvénient de nécessiter deux modules optiques successifs : tout d'abord un oscillateur laser « maître », puis un ensemble d'amplificateurs en parallèle. Enfin, un système d'analyse des phases des faisceaux élémentaires, ainsi qu'une boucle de rétroaction et un jeu de modulateurs de phase situés entre l'oscillateur maître et les amplificateurs complètent le dispositif. Il va de soi qu'une telle disposition s'avère particulièrement complexe et coûteuse à mettre en oeuvre, tout en présentant un encombrement significatif.

Pour toutes ces raisons, il est souhaitable de disposer uniquement d'un oscillateur laser, apte à générer lui-même et de façon autonome les faisceaux laser élémentaires, en vue de leur rassemblement ultérieur.

Pour y parvenir, une solution connue est décrite dans le document US 7,130,113. Elle consiste en effet à disposer, à l'intérieur d'un même oscillateur laser, une pluralité de cavités laser élémentaires aptes à générer respectivement une pluralité de faisceaux laser élémentaires dont les fréquences d'émission sont identiques. Chaque cavité laser élémentaire comprend à cet effet un milieu amplificateur qui, lorsqu'il est pompé ou excité par un apport d'énergie, génère un bruit intrinsèque dans toutes les directions de l'espace. La lumière qui se propage dans la direction correspondant à l'axe de la cavité laser élémentaire est amplifiée à chaque passage successif dans le milieu amplificateur de chaque cavité laser élémentaire, si bien que chaque faisceau laser élémentaire converge vers un état stationnaire dans lequel il atteint, en sortie de l'oscillateur laser, sa puissance nominale. Par la suite, les faisceaux laser élémentaires ainsi générés dans les différentes cavités laser élémentaires sont mis en phase de façon tout-optique par un diaphragme qui limite les faisceaux laser élémentaires émis à des portions à proximité de l'axe optique. Enfin, les faisceaux laser élémentaires ainsi mis en phase sont combinés de manière à former un unique faisceau laser de puissance élevée. La mise en phase des faisceaux laser élémentaires est ainsi simplifiée.

Toutefois, si cette solution connue est efficace pour combiner un nombre limité de faisceaux élémentaires (typiquement inférieur à dix), elle n'est pas satisfaisante lorsque le nombre de faisceaux élémentaire devient plus élevé. En effet, on sait que les fréquences de résonance (ou coïncidences modales) de l'ensemble des cavités laser élémentaires sont les degrés de liberté de l'oscillateur laser et permettent d'ajuster le spectre d'émission laser de façon à maximiser l'efficacité de combinaison. Aussi, il importe d'en disposer du plus grand nombre possible afin d'assurer une combinaison efficace des faisceaux laser élémentaires. Or, lorsque le nombre de faisceaux laser élémentaires augmente, on constate un phénomène de raréfaction de ces fréquences de résonance qui engendre de fait une dégradation de l'efficacité de combinaison. Dès lors, lorsqu'on cherche à mettre en phase les faisceaux laser élémentaires par voie passive et donc par auto-ajustement du spectre d'émission, comme c'est le cas dans le document US 7,130,113, les coïncidences modales se raréfient et l'efficacité de combinaison est dégradée.

L'objet de la présente invention est donc un procédé de génération d'un faisceau laser, ainsi qu'un oscillateur laser, qui permettent de générer de façon autonome un faisceau laser de puissance élevée à partir d'un nombre élevé de faisceaux laser élémentaires générés à partir d'un même oscillateur laser.

A cette fin, selon l'invention, le procédé de génération d'un faisceau laser, dans lequel :
- un ensemble de N faisceaux laser élémentaires est généré à partir d'un oscillateur laser, N étant un entier au moins égal à 2 ;
- à l'intérieur dudit oscillateur laser, la phase de chacun des N faisceaux laser élémentaires est ajustée de manière que lesdits faisceaux laser élémentaires soient en phase ; et
- lesdits N faisceaux laser élémentaires sont ultérieurement rassemblés en vue de former le faisceau laser,
est remarquble en ce que, en vue d'ajuster la phase de chacun des N faisceaux laser élémentaires, l'écart entre la phase d'un faisceau laser élémentaire individuel et les phases des N-1 autres faisceaux laser élémentaires est converti en niveau d'intensité lumineuse au moyen d'au moins un élément de filtrage optique vers lequel au moins une partie de chaque faisceau laser élémentaire est dirigée.

Ainsi, grâce à l'invention, il est possible de mettre en phase les N faisceaux laser élémentaires de manière efficace, en augmentant le nombre de degrés de liberté de l'oscillateur laser. En effet, l'ajustement de la phase de chaque faisceau laser élémentaire se produit à l'intérieur même de l'oscillateur laser, à chaque passage successif de celui-ci dans ledit oscillateur. Par conséquent, en même temps que chaque faisceau laser élémentaire converge vers un état stationnaire dans lequel il présente sa puissance nominale, tous les faisceaux laser élémentaires convergent ensemble vers un état stationnaire global dans lequel ils présentent non seulement leurs puissances nominales, mais également des phases parfaitement ajustées les unes par rapport aux autres, si bien que leur combinaison ultérieure est rendue particulièrement efficace.

Ainsi, alors que la technique antérieure décrite dans le document US 7,130,113 aurait incité l'homme du métier à ajuster une seule fois les phases des N faisceaux laser élémentaires en sortie de l'oscillateur laser, par une contre-réaction tout-optique (un seul oscillateur à N bras) pour lequel le nombre de bras efficacement recombiné est limité, l'invention propose au contraire d'ajuster ces mêmes phases à l'intérieur même de l'oscillateur, ce qui favorise un ajustement en continu de celles-ci, de façon tout-optique, au fur et à mesure de la génération de ces faisceaux.

Grâce encore à l'invention, on bénéficie des avantages conférés par les oscillateurs laser auto-générateurs conformes à l'art antérieur, à savoir une complexité et un coût sensiblement réduits.

L'élément de filtrage optique peut être agencé pour appliquer une atténuation différentielle à chaque faisceau laser élémentaire en fonction de la différence entre les phases desdits faisceaux.

Afin que les faisceaux laser élémentaires convergent vers un état stationnaire dans lequel ils sont en phase, la phase de chaque faisceau laser élémentaire est ajustée de manière itérative à chaque passage successif dudit faisceau laser élémentaire à l'intérieur de l'oscillateur laser.

De préférence, lors de l'ajustement de la phase d'un faisceau laser élémentaire individuel dudit ensemble de N faisceaux laser élémentaires, après que l'écart entre la phase du faisceau laser élémentaire individuel et les phases des N-1 autres faisceaux laser élémentaires soit converti en niveau d'intensité lumineuse :
- le niveau d'intensité lumineuse ainsi obtenu est converti en déphasage, et
- le déphasage ainsi obtenu est appliqué audit faisceau laser élémentaire individuel de manière à compenser ledit écart entre la phase dudit faisceau laser élémentaire individuel et les phases desdits N-1 autres faisceaux laser élémentaires.

De cette manière, les phases des N faisceaux laser élémentaires sont auto-ajustées de façon purement optique, à l'intérieur même de l'oscillateur laser, suivant un processus itératif de conversion « écarts de phase - écarts d'amplitude » puis « écarts d'amplitude - déphasages à appliquer aux faisceaux laser élémentaires ».

Une pluralité d'éléments optiques présentant des propriétés optiques non-linéaires peuvent être disposés à l'intérieur de l'oscillateur laser de manière à convertir, en déphasage, au moins une partie du niveau d'intensité lumineuse obtenu à partir de l'écart entre la phase d'un faisceau laser élémentaire individuel et les phases des N-1 autres faisceaux laser élémentaires.

Selon une première forme de réalisation dans laquelle le trajet des faisceaux laser élémentaires consiste en une boucle au sein de l'oscillateur laser, au moins N moyens de guidage lumineux sont disposés entre les extrémités de l'oscillateur laser, respectivement sur le trajet des N faisceaux laser élémentaires, de manière que lesdits N faisceaux laser élémentaires effectuent des passages successifs à l'intérieur de l'oscillateur laser dans un unique sens suivant une boucle.

Dans ce cas, les moyens de guidage lumineux peuvent être des fibres optiques non-linéaires agencées de manière à convertir, en déphasage, au moins une partie du niveau d'intensité lumineuse obtenu à partir de l'écart entre la phase d'un faisceau laser élémentaire individuel et les phases des N-1 autres faisceaux laser élémentaires.

Selon une deuxième forme de réalisation dans laquelle le trajet des faisceaux laser élémentaires consiste en des allers-retours au sein de l'oscillateur laser, au moins deux réflecteurs sont disposés aux extrémités de l'oscillateur laser de manière que les N faisceaux laser élémentaires effectuent des passages successifs à l'intérieur de l'oscillateur laser dans deux sens opposés, par réflexions multiples sur lesdits réflecteurs.

Afin de générer en parallèle chaque faisceau laser élémentaire, une pluralité de milieux amplificateurs sont disposées en parallèle à l'intérieur de l'oscillateur laser de manière que les N faisceaux laser élémentaires soient générés en traversant respectivement lesdits milieux amplificateurs.

Dans ce cas, les milieux amplificateurs peuvent présenter des gains non-linéaires de manière à convertir, en déphasage, au moins une partie du niveau d'intensité lumineuse obtenu à partir de l'écart entre la phase d'un faisceau laser élémentaire individuel et les phases des N-1 autres faisceaux laser élémentaires.

Toujours dans le cas précité, afin de générer en parallèle et de façon autonome chaque faisceau laser élémentaire, les N faisceaux laser élémentaires peuvent être générés respectivement à partir des milieux amplificateurs par amplification d'au moins une partie de leur bruit intrinsèque à l'intérieur de l'oscillateur laser.

Avantageusement, on rassemble, en sortie de l'oscillateur laser, les N faisceaux laser élémentaires.

L'invention concerne également un oscillateur laser apte à générer un ensemble de N faisceaux laser élémentaires en vue de les rassembler ultérieurement pour former un faisceau laser, N étant un entier au moins égal à 2, ledit oscillateur comprenant des moyens d'ajustement de la phase de chaque faisceau laser élémentaire de manière que lesdits N faisceaux laser élémentaires soient en phase en vue de leur rassemblement ultérieur, remarquable en ce que lesdits moyens d'ajustement comprennent au moins un élément de filtrage optique, vers lequel au moins une partie de chaque faisceau laser élémentaire est dirigée, de manière à convertir l'écart entre la phase d'un faisceau laser élémentaire individuel et les phases des N-1 autres faisceaux laser élémentaires en niveau d'intensité lumineuse.

Les figures du dessin annexé feront bien comprendre comment l'invention peut être réalisée. Sur ces figures, des références identiques désignent des éléments semblables.
La figure 1 représente schématiquement un oscillateur laser selon une première forme de réalisation de la présente invention.
La figure 2 représente schématiquement un oscillateur laser selon une deuxième forme de réalisation de l'invention.
La figure 3 est un schéma représentant plus particulièrement un exemple de moyens de conversion des écarts de phase entre les faisceaux laser élémentaires en niveaux d'intensité lumineuse.
La figure 4 comporte des schémas A, B, C et D représentant un exemple d'élément de filtrage optique intégrés aux moyens d'ajustement optique de la figure 3.

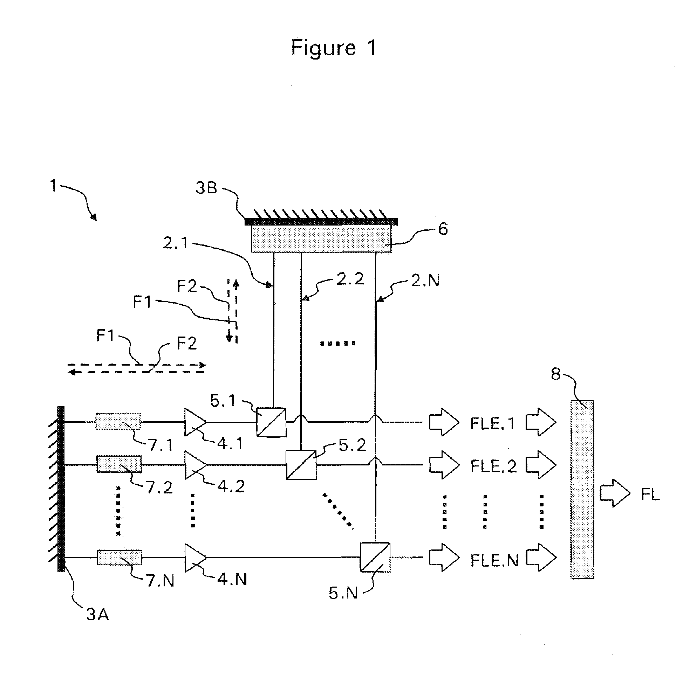

Sur la figure 1, on a représenté schématiquement un oscillateur laser 1 conforme à la présente invention, apte à générer un ensemble de N faisceaux laser élémentaires FLE.1, FLE.2, ..., FLE.N.

A cette fin, l'oscillateur 1 comprend un ensemble de cavités laser élémentaires 2.1, 2.2, ..., 2.N dont les extrémités (qui coïncident avec celles de l'oscillateur 1) sont pourvues respectivement de deux réflecteurs 3A et 3B agencés de manière que le faisceau laser élémentaire généré par chaque cavité laser élémentaire effectue des allers-retours à l'intérieur de l'oscillateur laser 1 par réflexions multiples sur les réflecteurs 3A et 3B. Ces réflecteurs peuvent être des miroirs, par exemple des miroirs de Bragg, dont le coefficient de réflexion est égal à 1. De façon alternative, il peut être prévu une pluralité de paires de réflecteurs élémentaires, chaque paire étant disposée aux extrémités d'une cavité laser élémentaire.

Chaque cavité élémentaire 2.1, 2.2, ..., 2.N comprend un milieu amplificateur 4.1, 4.2, ..., 4.N, qui émet, lorsqu'il est excité, un bruit intrinsèque dans toutes les directions de l'espace. Parmi ces directions, l'une (représentée en traits pleins au niveau de la cavité 2.1, 2.2, ..., 2.N correspondante) coïncide avec l'axe de la cavité correspondante. Cet axe, parallèle aux flèches F1 et F2, est formé par le prolongement des miroirs 3A et 3B et du milieu amplificateur 4.1, 4.2, ..., 4.N correspondant. Le bruit intrinsèque émis dans cette direction privilégiée se propage le long de cet axe (dans la direction de la flèche F1), est réfléchi sur le miroir 3B, puis se propage en sens inverse le long de cet axe (dans la direction de la flèche F2) et traverse le milieu amplificateur correspondant, où il est amplifié. Ce bruit amplifié est réfléchi sur le miroir 3A, puis se propage le long de l'axe de la cavité (dans la direction de la flèche F1) et traverse de nouveau le milieu amplificateur, où il est encore amplifié. La répétition de ce trajet, du fait des réflexions multiples sur les réflecteurs 3A et 3B, produit une amplification du bruit intrinsèque généré par le milieu amplificateur, qui, après plusieurs allers-retours suivant les flèches F1 et F2, atteint un état stationnaire dans lequel un faisceau laser FLE.1, FLE.2, ..., FLE.N est généré dans la cavité.

Ainsi, chaque faisceau laser élémentaire FLE.1, FLE.2, ..., FLE.N est généré à l'intérieur de l'oscillateur laser 1, de façon autonome, à partir des cavités laser élémentaires 2.1, 2.2, ..., 2.N qui le composent.

Ces faisceaux laser élémentaires FLE.1, FLE.2, ..., FLE.N sont dirigés vers une sortie de l'oscillateur 1, par l'intermédiaire respectivement de coupleurs de sortie 5.1, 5.2, ..., 5.N. Chaque coupleur, par exemple un système d'extraction par polarisation (ou encore un cube séparateur), est agencé pour réfléchir une première partie du faisceau laser élémentaire correspondant, provenant du milieu amplificateur, de manière que cette première partie soit dirigée vers le réflecteur 3B et continue ainsi à se propager au sein de la cavité laser élémentaire. De même, lors du retour du faisceau sur le coupleur après réflexion sur le réflecteur 3B, celui-ci est de nouveau réfléchi par ledit coupleur pour être dirigé vers le réflecteur 3A et rester ainsi dans la cavité. La deuxième partie du faisceau élémentaire, quant à elle, est transmise par le coupleur de sortie en direction de la sortie de l'oscillateur 1. Pour un faisceau laser ainsi généré, il est possible de ne conserver qu'une faible portion du faisceau pour la première partie à amplifier, par exemple 5%, tandis que le reste (95%) est transmis en sortie de l'oscillateur.

L'oscillateur laser 1 génère donc un ensemble de N faisceaux laser élémentaires FLE.1, FLE.2, ..., FLE.N qui, en sortie dudit oscillateur, sont préférentiellement collimatés et colinéaires. Il est possible de combiner ultérieurement ces N faisceaux élémentaires, par l'intermédiaire par exemple d'un élément de combinaison 8, qui peut être une lentille agencée pour faire converger l'ensemble des N faisceaux élémentaires vers un unique point de focalisation. Toutefois, dans le cas où le faisceau FL est prévu pour illuminer une cible éloignée, la combinaison peut s'opérer sans qu'il soit nécessaire de prévoir un tel élément de combinaison. Le faisceau laser FL, résultant de cette combinaison, présente alors une puissance d'autant plus élevée que le nombre N de faisceaux laser élémentaires - et donc de cavités laser élémentaires correspondantes - est élevé.

Parmi les milieux amplificateurs connus de l'homme du métier pour générer un faisceau laser, on notera qu'une fibre optique amplificatrice est particulièrement bien adaptée, puisqu'elle présente des caractéristiques de confinement optique élevées qui favorisent l'obtention d'un faisceau laser confiné et, par là-même, de haute qualité spatiale.

On comprendra que, par cavité laser élémentaire, on entend une cavité apte à générer par elle-même un faisceau laser élémentaire, de façon indépendante vis-à-vis d'autres cavités laser. Une telle cavité peut être convenablement formée à partir d'un milieu amplificateur entouré par deux réflecteurs. Parmi ces éléments, il importe, pour que les cavités soient indépendantes, que le milieu amplificateur soit propre à la cavité, tandis que les réflecteurs peuvent être communs à plusieurs cavités.

Afin de corriger, à l'intérieur de l'oscillateur laser 1 conforme à la présente invention, les erreurs de phase entre les faisceaux élémentaires, et afin que ces faisceaux soient en phase les uns par rapport aux autres à la sortie dudit oscillateur, ce dernier comprend des moyens d'ajustement de la phase de chaque faisceau.

Ces moyens d'ajustement comprennent :
- des premiers moyens de conversion 6 des écarts entre les phases ϕ.1, ϕ.2, ..., ϕ.N des faisceaux laser élémentaires FLE.1, FLE.2, ..., FLE.N en niveaux d'intensité lumineuse ΔI.1, ΔI.2, ..., ΔI.N; et
- des seconds moyens de conversion 7.1, 7.2, ..., 7.N des niveaux d'intensité lumineuse ainsi obtenus en déphasages Δϕ.1, Δϕ.2, ..., Δϕ.N.

Les premiers moyens de conversion 6 sont disposés entre les coupleurs de sortie 5.1, 5.2, ..., 5.N et le réflecteur 3B de manière que les portions de faisceaux laser élémentaires FLE.1, FLE.2, ..., FLE.N qui ont été prélevées par les coupleurs de sortie 5.1, 5.2, ..., 5.N traversent ces premiers moyens de conversion 6.

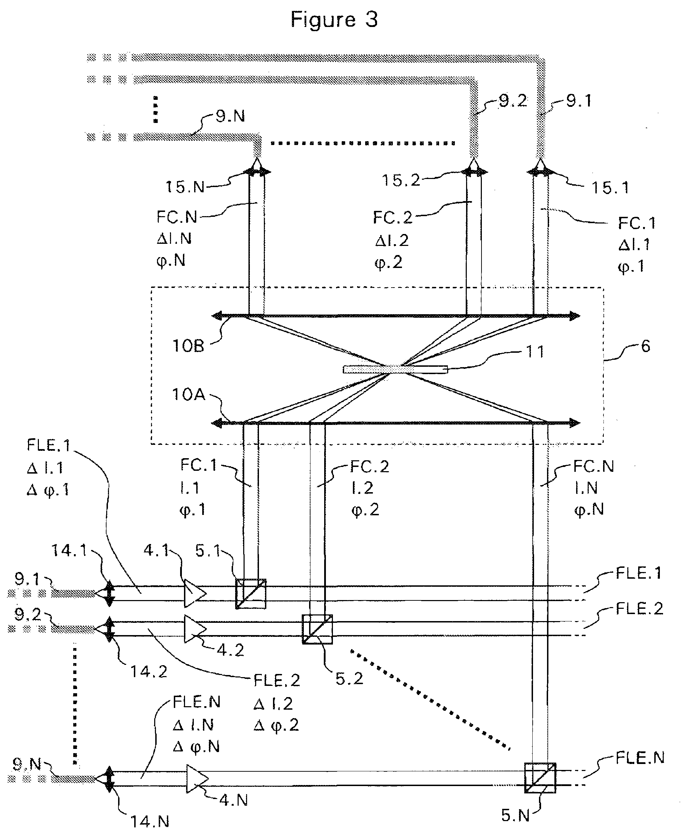

Comme cela est illustré sur la figure 3, la fonction de ces premiers moyens de conversion 6 est de convertir l'écart entre la phase ϕ.1 d'un premier faisceau laser élémentaire individuel FLE.1 (qui présente par ailleurs un niveau d'intensité lumineuse I.1) et les phases ϕ.2, ..., ϕ.N des N-1 autres faisceaux laser élémentaires FLE.2, ..., FLE.N (qui présentent par ailleurs respectivement des niveaux d'intensité lumineuse I.2, ..., I.N) en un niveau d'intensité lumineuse ΔI.1, et ainsi de suite pour les phases des autres faisceaux laser élémentaires individuels.

Ainsi, la portion prélevée de chaque faisceau individuel, renvoyée vers un coupleur de sortie 5.1, 5.2, ..., 5.N après réflexion sur le réflecteur 3B, porte une information d'intensité lumineuse représentative de l'écart de phase entre ce faisceau et les autres. En d'autres termes, ce faisceau individuel porte une information sur le décalage de phase qu'il est nécessaire d'introduire au niveau dudit faisceau pour qu'il soit en phase avec les N-1 autres faisceaux. Ces premiers moyens de conversion 6 permettent ainsi de différencier les informations de phase et d'amplitude destinées à être renvoyées vers les N milieux amplificateurs.

Les seconds moyens de conversion 7.1, 7.2, ..., 7.N sont disposés entre le réflecteur 3A et les milieux amplificateurs 4.1, 4.2, ..., 4.N de manière que les N faisceaux laser élémentaires FLE.1, FLE.2, ..., FLE.N destinés à être amplifiés - et notamment les portions décrites ci-dessus de ces faisceaux qui portent des informations d'écarts de niveaux d'intensité lumineuse - traversent ces moyens 7.1, 7.2, ..., 7.N. Ils ont pour fonction de transformer les niveaux d'intensité I.1, I.2, ..., I.N obtenus en sortie des premiers moyens de conversion 6 en déphasages respectivement Δϕ.1, Δϕ.2, ..., Δϕ.N.

Ces déphasages sont appliqués aux faisceaux laser élémentaires correspondants, les seconds moyens de conversion 7.1, 7.2, ..., 7.N étant disposés respectivement à l'intérieur des cavités élémentaires 2.1, 2.2, ..., 2.N. Les écarts de phase entre les différents faisceaux laser élémentaires, liés aux trajets optiques différents dans les cavités laser élémentaires, sont ainsi compensés au moment de l'amplification optique suivante dans ces mêmes cavités élémentaires.

Dans cette forme particulière de réalisation, les seconds moyens de conversion 7.1, 7.2, ..., 7.N sont formés par des éléments optiques à propriétés non-linéaires, tels que des modulateurs de phase, indépendants des milieux amplificateurs 4.1, 4.2, ..., 4.N. De façon alternative, ces milieux amplificateurs peuvent présenter des gains non-linéaires, de sorte qu'ils forment eux-mêmes les seconds moyens de conversion. En effet, du fait de la non-linéarité du gain au sein des amplificateurs 4.1, 4.2, ..., 4.N, les gains différentiels entre ces amplificateurs, dans lesquels sont injectés des signaux dont les amplitudes sont généralement différentes (par exemple liées aux premiers moyens de conversion 6), engendrent eux-mêmes un déphasage différentiel. De façon encore alternative, les seconds moyens de conversion peuvent être formés d'une combinaison des éléments précités.

Ainsi, les moyens d'ajustement 6 et 7.1, 7.2, ..., 7.N, qui sont de nature optique, permettent d'ajuster les phases des faisceaux laser élémentaires pour qu'ils puissent être combinés de façon cohérente en sortie de l'oscillateur 1, en vue d'obtenir un faisceau laser FL dont la densité lumineuse est d'autant plus élevée.

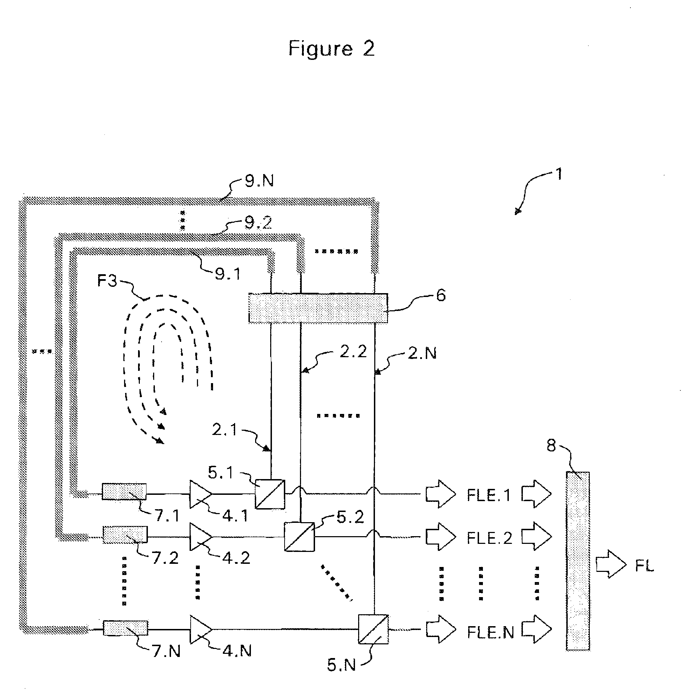

Dans l'exemple de la figure 1, l'oscillateur laser 1 conforme à l'invention présente une configuration de type linéaire. Une configuration de type annulaire est représentée schématiquement sur la figure 2.

Elle se distingue de la configuration linéaire de la figure 1 en ce que les réflecteurs 3A et 3B sont remplacés par N moyens de guidage de lumière 9.1, 9.2, ..., 9.N, chaque moyen de guidage étant associé à l'une des N cavités laser élémentaires 2.1, 2.2, ..., 2.N. Chaque moyen de guidage est agencé pour que la portion prélevée de chaque faisceau élémentaire soit injectée dans ce moyen de guidage et se propage dans celui-ci pour être dirigé vers les seconds moyens de conversion 7.1, 7.2, ..., 7.N de la cavité laser élémentaire correspondante.

Ces moyens de guidage 9.1, 9.2, ..., 9.N permettent donc de rejoindre les extrémités de chaque cavité laser élémentaire, où sont disposés les réflecteurs 3A et 3B dans la configuration de la figure 1, pour que les faisceaux laser élémentaires FLE.1, FLE.2, ..., FLE.N se propagent respectivement dans les cavités laser élémentaires 2.1, 2.2, ..., 2.N dans un unique sens, représenté par la flèche F3, de manière que le trajet de ces faisceaux forme une boucle dans laquelle le faisceau est amplifié respectivement par les milieux amplificateurs 4.1, 4.2, ..., 4.N.

De cette manière, les premiers moyens de conversion 6 sont directement reliés aux seconds moyens de conversion 7.1, 7.2, ..., 7.N, dans le sens du trajet des faisceaux FLE.1, FLE.2, ..., FLE.N, et les phases ϕ.1, ϕ.2, ..., ϕ.N des faisceaux laser élémentaires sont donc bien ajustés à chaque boucle parcourue dans l'oscillateur de manière à converger vers un état stationnaire dans lequel tous les faisceaux FLE.1, FLE.2, ..., FLE.N sont en phase et peuvent donc être combinés de façon cohérente pour maximiser la densité de lumière résultante de cette combinaison.

Selon une autre forme de réalisation de l'invention, les moyens de guidage lumineux 9.1, 9.2, ..., 9.N sont des fibres optiques non-linéaires, de manière qu'ils puissent former au moins en partie les seconds moyens de conversion. De façon alternative, les seconds moyens de conversion peuvent comprendre une combinaison de telles fibres optiques non-linéaires, d'éléments indépendants à propriétés optiques non-linéaires et de milieux amplificateurs à gains non-linéaires, ou bien une combinaison de deux d'entre eux seulement.

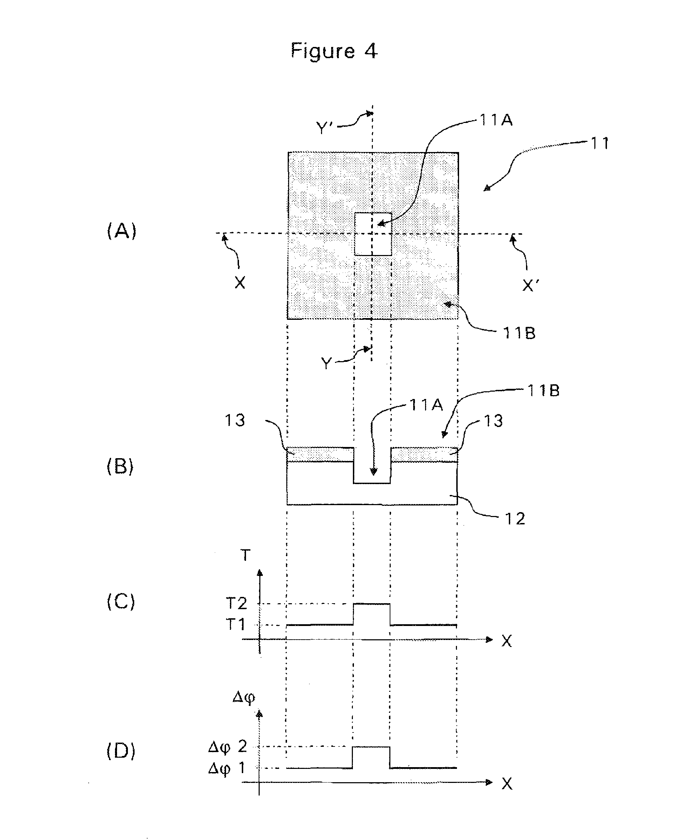

On décrit à présent un exemple de réalisation purement optique des premiers moyens de conversion 6, adaptés à une configuration de type annulaire (figure 2), en référence aux figures 3 et 4. Ces moyens 6, qui réalisent la conversion d'écarts de phase en niveaux d'intensité lumineuse, comportent une paire de lentilles 10A et 10B disposées de manière que le plan focal image de la lentille 10A coïncide avec le plan focal objet de la lentille 10B, pour former un système optique afocal, ainsi qu'un filtre optique 11 disposé au niveau des plans focaux respectivement image de la lentille 10A et objet de la lentille 10B, de manière qu'il soit centré sur l'axe du système optique afocal ainsi formé.

Ainsi agencés, les premiers moyens de conversion 6 permettent de diriger les portions prélevées FC.1, FC.2, ..., FC.N respectivement des faisceaux laser élémentaires FLE.1, FLE.2, ..., FLE.N en une même zone du filtre optique 11, dont la structure est représentée plus précisément en vue de dessus sur le schéma 1 de la figure 4. Ce filtre optique spatial 11 fonctionne suivant le principe du contraste de phase, plus particulièrement connu dans le domaine de la microscopie à contraste de phase. Ce filtre 11 présente par exemple deux zones respectivement centrale 11A et périphérique 11 B, dont les propriétés optiques diffèrent en terme de phase et d'atténuation, en vue d'appliquer à chacun des N faisceaux laser qui le traverse une atténuation différentielle en fonction du déphasage entre le filtre 11 et le faisceau laser considéré, dans le plan du filtre 11.

A cet effet, comme représenté en vue de coupe sur le schéma B de la figure 4, le filtre optique 11 comporte :
- une couche inférieure 12 de déphasage, dont l'étendue recouvre les zones centrale 11A et périphérique 11 B, et qui présente un creux supplémentaire au niveau de ladite zone centrale 11 A, et
- une couche supérieure 13 d'atténuation d'amplitude, dont l'étendue coïncide avec la zone périphérique 11 B.

La couche inférieure 12, qui réalise le décalage de phase souhaité, peut être formée d'une lame de verre de qualité optique élevée, gravée sur sa partie centrale. La couche supérieure 13, qui participe à l'atténuation partielle de l'amplitude de chaque faisceau laser élémentaire (uniquement la partie périphérique dudit faisceau), peut être formée, quant à elle, d'un dépôt approprié de couches diélectriques.

Selon une autre forme de réalisation du filtre 11, celui-ci est formé d'une unique couche, dont la forme et l'étendue sont analogues à celles de la couche inférieure 12 et dont les propriétés optiques conviennent pour, à la fois, atténuer et déphaser chaque faisceau élémentaire. Il peut être par exemple pratiqué à cet effet un traitement diélectrique adéquat.

Le filtre optique 11 permet ainsi :
- comme cela est illustré sur le schéma C de la figure 4 (qui représente un exemple de profil du niveau de transparence du filtre 11 suivant son étendue longitudinale), d'atténuer l'amplitude de la partie périphérique (transmittance T1) par rapport à celle de sa partie centrale (transmittance T2 supérieure à T1) de chaque faisceau laser élémentaire, et
- comme cela est illustré sur le schéma D de la figure 4 (qui représente un exemple de profil du niveau de déphasage du filtre 11 suivant son étendue longitudinale), d'introduire un décalage de phase entre la partie périphérique (déphasage Δϕ1) et la partie centrale (déphasage Δϕ2 supérieur à Δϕ1) de chaque faisceau laser élémentaire.

Par la suite, ces faisceaux élémentaires FC.1, FC.2, ..., FC.N, dont la phase et l'amplitude ont été modifiées spatialement, sont dirigés vers les seconds moyens de conversion 7.1, 7.2, ..., 7.N.

Les premiers moyens de conversion 6 ont été représentés sur les figure 3 et 4 en vue de leur intégration dans un oscillateur laser conforme à la présente invention, suivant une configuration de type annulaire (figure 2). Dans le cas où il est souhaité d'intégrer ces moyens 6 dans un oscillateur laser dont la configuration est de type linéaire (figure 1), l'homme du métier notera qu'il lui suffit d'adapter la structure des moyens 6 en tenant compte du fait que chaque faisceau élémentaire traverse alors deux fois ces moyens 6 du fait de la réflexion sur le réflecteur 3B. Ainsi, dans ce type de configuration, le système optique afocal des moyens 6 peut être réalisé à partir d'une unique lentille 10A dont le plan focal image coïncide avec le plan du réflecteur 3B, et d'un filtre optique 11 conforme à celui de des schémas A et B de la figure 4, disposé contre le réflecteur 3B et dont les épaisseurs des différentes parties sont divisés par deux. Dans cette configuration, ces moyens 6 sont ainsi formés de manière à reconstituer les moyens 6 de la figure 3 par réflexion sur le réflecteur 3B.

Comme mentionné ci-dessus, les seconds moyens de conversion, qui réalisent la fonction de conversion de niveaux d'intensité lumineuse en déphasages, peuvent être formés par les milieux amplificateurs 4.1, 4.2, ..., 4.N, par les moyens de guidage lumineux 9.1, 9.2, ..., 9.N et/ou par des éléments indépendants à propriétés optiques non-linéaires. Toutefois, de façon équivalente, il peut être utilisé des composants additionnels pour réaliser cette conversion intensité/phase à la place ou en complément des éléments précités. Plus particulièrement, ces composants peuvent avoir des propriétés optiques telles qu'ils sont sensibles à l'intensité lumineuse incidente, par exemple à travers des non-linéarités de type Kerr ou à travers des effets thermo-optiques.

On notera que, dans le cas où les milieux amplificateurs 4.1, 4.2, ..., 4.N sont formés de fibres optiques amplificatrices, il importe de disposer en sortie de ces fibres des moyens de collimation 14.1, 14.2, ..., 14.N des faisceaux laser élémentaires FLE.1, FLE.2, ..., FLE.N, par exemple sous la forme de lentilles collimatrices dont les plans focaux objets sont positionnés sensiblement aux extrémités des fibres. De même, afin d'injecter de façon optimale les faisceaux prélevés FC.1, FC.2, ..., FC.N respectivement dans les moyens de guidage de lumière 9.1, 9.2, ..., 9.N, il est avantageux de disposer en amont desdits moyens de guidage des moyens d'injection 15.1, 15.2, ..., 15.N desdits faisceaux prélevés, par exemple sous la forme de lentilles convergentes dont les plans focaux images sont positionnés sensiblement aux extrémités des moyens de guidage.

## Revendications

1. Procédé de génération d'un faisceau laser (FL), dans lequel :
- un ensemble de N faisceaux laser élémentaires (FLE.1, FLE.2, ..., FLE.N) est généré à partir d'un oscillateur laser (1), N étant un entier au moins égal à 2 ;
- à l'intérieur dudit oscillateur laser, la phase (ϕ.1, ϕ.2, ..., ϕ.N) de chacun des N faisceaux laser élémentaires est ajustée de manière que lesdits faisceaux laser élémentaires soient en phase ; et
- lesdits N faisceaux laser élémentaires sont ultérieurement rassemblés en vue de former le faisceau laser (FL),
dans lequel, en vue d'ajuster la phase de chacun des N faisceaux laser élémentaires :
- l'écart entre la phase (ϕ.1) d'un faisceau laser élémentaire individuel (FLE.1) et les phases (ϕ.2, ..., ϕ.N) des N-1 autres faisceaux laser élémentaires (FLE.2, ..., FLE.N) est converti en niveau d'intensité lumineuse (ΔI.1) au moyen d'au moins un élément de filtrage optique par contraste de phase (11) vers lequel au moins une partie (FC.1, FC.2, ..., FC.N) de chaque faisceau laser élémentaire est dirigée ;
- le niveau d'intensité lumineuse (ΔI.1) ainsi obtenu est converti en déphasage (Δϕ.1) ; et
- le déphasage (Δϕ.1) ainsi obtenu est appliqué audit faisceau laser élémentaire individuel (FLE.1) de manière à compenser ledit écart entre la phase (ϕ.1) dudit faisceau laser élémentaire individuel (FLE.1) et les phases (ϕ.2, ..., ϕ.N) desdits N-1 autres faisceaux laser élémentaires (FLE.2, ..., FLE.N).

2. Procédé selon la revendication 1,
**caractérisé en ce que** l'élément de filtrage optique (11) est agencé pour appliquer une atténuation différentielle (ΔI.1, ΔI.2, ..., ΔI.N) à chaque faisceau laser élémentaire (FLE.1, FLE.2, ..., FLE.N) en fonction de la différence entre les phases (ϕ.1, ϕ.2, ..., ϕ.N) desdits faisceaux.

3. Procédé selon l'une des revendications 1 ou 2,
**caractérisé en ce que** la phase (ϕ.1, ϕ.2, ..., ϕ.N) de chaque faisceau laser élémentaire (FLE.1, FLE.2, ..., FLE.N) est ajustée de manière itérative à chaque passage successif dudit faisceau laser élémentaire à l'intérieur de l'oscillateur laser (1).

4. Procédé selon l'une des revendications 1 à 3,
**caractérisé en ce qu'**une pluralité d'éléments optiques (7.1, 7.2, ..., 7. N) à propriétés non-linéaires sont disposés à l'intérieur de l'oscillateur laser (1) de manière à convertir, en déphasage (Δϕ.1), au moins une partie du niveau d'intensité lumineuse (ΔI.1) obtenu à partir de l'écart entre la phase (ϕ.1) d'un faisceau laser élémentaire individuel (FLE.1) et les phases (ϕ.2, ..., ϕ.N) des N-1 autres faisceaux laser élémentaires (FLE.2, ..., FLE.N).

5. Procédé selon l'une des revendications 1 à 4,
**caractérisé en ce qu'**au moins N moyens de guidage lumineux (9.1, 9.2, ..., 9.N) sont disposés entre les extrémités de l'oscillateur laser (1), respectivement sur le trajet des N faisceaux laser élémentaires (FLE.1, FLE.2, ..., FLE.N), de manière que lesdits N faisceaux laser élémentaires effectuent des passages successifs à l'intérieur de l'oscillateur laser (1) dans un unique sens (F3) suivant une boucle.

6. Procédé selon la revendication 5,
**caractérisé en ce que** les moyens de guidage lumineux (9.1, 9.2, ..., 9.N) sont des fibres optiques non-linéaires agencées de manière à convertir, en déphasage (Δϕ.1), au moins une partie du niveau d'intensité lumineuse (ΔI.1) obtenu à partir de l'écart (Δϕ.1) entre la phase (ϕ.1) d'un faisceau laser élémentaire individuel (FLE.1) et les phases (ϕ.2, ..., ϕ.N) des N-1 autres faisceaux laser élémentaires (FLE.2, ..., FLE.N).

7. Procédé selon l'une des revendications 1 à 4,
**caractérisé en ce qu'**au moins deux réflecteurs (3A, 3B) sont disposés aux extrémités de l'oscillateur laser (1) de manière que les N faisceaux laser élémentaires (FLE.1, FLE.2, ..., FLE.N) effectuent des passages successifs à l'intérieur de l'oscillateur laser (1) dans deux sens opposés (F1, F2), par réflexions multiples sur lesdits réflecteurs.

8. Procédé selon l'une des revendications précédentes,
**caractérisé en ce qu'**une pluralité de milieux amplificateurs (4.1, 4.2, ..., 4.N) sont disposés en parallèle à l'intérieur de l'oscillateur laser (1) de manière que les N faisceaux laser élémentaires (FLE.1, FLE.2, ..., FLE.N) soient générés en traversant respectivement lesdits milieux amplificateurs.

9. Procédé selon la revendication 8,
**caractérisé en ce que** les milieux amplificateurs (4.1, 4.2, ..., 4.N) présentent des gains non-linéaires de manière à convertir, en déphasage (Δϕ.1), au moins une partie du niveau d'intensité lumineuse (ΔI.1) obtenu à partir de l'écart (Δϕ.1) entre la phase (ϕ.1) d'un faisceau laser élémentaire individuel (FLE.1) et les phases (ϕ.2, ..., ϕ.N) des N-1 autres faisceaux laser élémentaires (FLE.2, ..., FLE.N).

10. Procédé selon l'une des revendications 8 ou 9,
**caractérisé en ce que** les N faisceaux laser élémentaires (FLE.1, FLE.2, ..., FLE.N) sont générés respectivement à partir des milieux amplificateurs (4.1, 4.2, ..., 4.N) par amplification d'au moins une partie de leur bruit intrinsèque à l'intérieur de l'oscillateur laser (1).

11. Oscillateur laser (1) apte à générer un ensemble de N faisceaux laser élémentaires (FLE.1, FLE.2, ..., FLE.N) en vue de les rassembler ultérieurement pour former un faisceau laser (FL), N étant un entier au moins égal à 2, ledit oscillateur (1) comprenant des moyens d'ajustement (6, 4.1, 4.2, ..., 4.N, 7.1, 7.2, ..., 7.N ; 6, 4.1, 4.2, ..., 4.N, 9.1, 9.2, ..., 9.N) de la phase de chaque faisceau laser élémentaire de manière que lesdits N faisceaux laser élémentaires soient en phase en vue de leur rassemblement ultérieur,
**caractérisé en ce que** lesdits moyens d'ajustement comprennent au moins :
- un élément de filtrage optique par contraste de phase (11), vers lequel au moins une partie (FC.1, FC.2, ..., FC.N) de chaque faisceau laser élémentaire est dirigée, de manière à convertir l'écart entre la phase (ϕ.1) d'un faisceau laser élémentaire individuel (FLE.1) et les phases (ϕ.2, ..., ϕ.N) des N-1 autres faisceaux laser élémentaires (FLE.2, ..., FLE.N) en niveau d'intensité lumineuse (ΔI.1) ;
- des moyens (7.1, ..., 7.N) pour convertir le niveau d'intensité lumineuse (ΔI.1) ainsi obtenu en déphasage (Δϕ.1) ; et
- des moyens pour appliquer audit faisceau laser élémentaire individuel (FLE.1) le déphasage (Δϕ.1) ainsi obtenu, de manière à compenser ledit écart entre la phase (ϕ.1) dudit faisceau élémentaire individuel (FLE.1) et les phases (ϕ.2, ..., ϕ.N) desdits N-1 autres faisceaux laser élémentaires (FLE.2, ..., FLE.N).

## Patentansprüche

1. Verfahren zum Erzeugen eines Laserstrahls (FL), wobei:
- ein Satz von N elementaren Laserstrahlen (FLE.1, FLE.2, ..., FLE.N) aus einem Laseroszillator (1) erzeugt ist, wobei N eine ganze Zahl ist, die mindestens gleich 2 ist;
- im Inneren des Laseroszillators die Phase (ϕ.1, ϕ.2, ..., ϕ.N) von jedem der N elementaren Laserstrahlen so eingestellt ist, dass die elementaren Laserstrahlen in Phase sind; und
- die N elementaren Laserstrahlen später gebündelt werden, um den Laserstrahl (FL) zu bilden,
wobei zum Einstellen der Phase von jedem der N elementaren Laserstrahlen:
- der Abstand zwischen der Phase (ϕ.1) eines einzelnen elementaren Laserstrahls (FLE.1) und den Phasen (ϕ.2, ..., ϕ.N) der anderen N-1 elementaren Laserstrahlen (FLE. 2, ..., FLE.N) mittels wenigstens eines optischen Filterelements durch Phasenkontrast (11) in Lichtintensitätsniveau (ΔI.1) umgewandelt ist, auf das mindestens ein Teil (FC. 1 FC.2 ... FC.N) jedes elementaren Laserstrahles gerichtet ist;
- das so erhaltene Lichtintensitätsniveau (ΔI.1) in Phasenverschiebung (Δϕ.1) umgewandelt ist; und
- die so erhaltene Phasenverschiebung (Δϕ.1) an den einzelnen elementaren Laserstrahl (FLE.1) angelegt ist, um den Abstand zwischen der Phase (ϕ.1) des einzelnen elementaren Laserstrahls (FLE.1) und den Phasen (ϕ.2, ..., ϕ.N) der N-1 anderen elementaren Laserstrahlen (FLE.2, ..., FLE.N) zu kompensieren.

2. Verfahren nach Anspruch 1,
**dadurch gekennzeichnet, dass** das optische Filterelement (11) angeordnet ist, um an jeden elementaren Laserstrahl (FLE.1, FLE.2, ..., FLE.N) abhängig von der Differenz zwischen den Phasen (ϕ.1, ϕ.2, ..., ϕ.N) der Strahlen eine differentielle Abschwächung (ΔI.1, ΔI.2, ..., ΔI.N) anzulegen.

3. Verfahren nach einem der Ansprüche 1 oder 2,
**dadurch gekennzeichnet, dass** die Phase (ϕ.1, ϕ.2, ..., ϕ.N) von jedem der elementaren Laserstrahlen (FLE.1, FLE.2, ..., FLE.N) bei jedem aufeinanderfolgenden Durchgang des elementaren Laserstrahls in dem Laseroszillator (1) iterativ eingestellt ist.

4. Verfahren nach einem der Ansprüche 1 bis 3,
**dadurch gekennzeichnet, dass** mehrere optische Elemente (7.1, 7.2, ..., 7. N) mit nichtlinearen Eigenschaften in dem Laseroszillator (1) angeordnet sind, um in Phasenverschiebung (Δϕ.1) mindestens einen Teil des Lichtintensitätsniveaus (ΔI.1) umzuwandeln, das aus dem Abstand zwischen der Phase (ϕ.1) eines einzelnen elementaren Laserstrahls (FLE.1) und den Phasen (ϕ.2, ..., ϕ.N) der anderen N-1 elementaren Laserstrahlen (FLE.2, ..., FLE.N) erhalten ist.

5. Verfahren nach einem der Ansprüche 1 bis 4,
**dadurch gekennzeichnet, dass** mindestens N Lichtführungsmittel (9.1, 9.2, ..., 9.N) zwischen den Enden des Laseroszillators (1) jeweils auf der Strecke der N elementaren Laserstrahlen (FLE .1 FLE.2, ..., FLE.N) derart angeordnet sind, dass die N elementaren Laserstrahlen aufeinanderfolgende Durchgänge in dem Laseroszillator (1) in einer einzigen Richtung (F3) in einer Schleife durchführen.

6. Verfahren nach Anspruch 5,
**dadurch gekennzeichnet, dass** diese Lichtführungsmittel (9.1, 9.2, ..., 9.N) nichtlineare optische Fasern sind, die angeordnet sind, um in Phasenverschiebung (Δϕ.1) mindestens einen Teil des Lichtintensitätsniveaus (ΔI.1) umzuwandeln, das aus dem Abstand (Δϕ.1) zwischen der Phase (ϕ.1) eines einzelnen elementaren Laserstrahls (FLE.1) und den Phasen (ϕ.2, ..., ϕ.N) der anderen N-1 elementaren Laserstrahlen (FLE.2, ..., FLE.N) erhalten ist.

7. Verfahren nach einem der Ansprüche 1 bis 4,
**dadurch gekennzeichnet, dass** mindestens zwei Reflektoren (3A, 3B) an den Enden des Laseroszillators (1) so angeordnet sind, dass die N elementaren Laserstrahlen (FLE.1 FLE.2, ..., FLE.N) aufeinanderfolgende Durchgänge in dem Laseroszillator (1) in zwei entgegengesetzten Richtungen (F1, F2) durch mehrfache Reflexionen auf den Reflektoren durchführen.

8. Verfahren nach einem der vorhergehenden Ansprüche,
**dadurch gekennzeichnet, dass** mehrere Verstärkermedien (4.1, 4.2, ..., 4.N) parallel innerhalb des Laseroszillators (1) so angeordnet sind, dass die N elementaren Laserstrahlen (FLE. 1 FLE.2, ..., FLE.N) erzeugt sind, indem sie jeweils die Verstärkermedien durchqueren.

9. Verfahren nach Anspruch 8,
**dadurch gekennzeichnet, dass** die Verstärkermedien (4.1, 4.2, ..., 4.N) nichtlineare Gewinne aufweisen, um in Phasenverschiebung (Δϕ.1) mindestens einen Teil des Lichtintensitätsniveaus (ΔI.1) umzuwandeln, das aus dem Abstand (Δϕ.1) zwischen der Phase (ϕ.1) eines einzelnen elementaren Laserstrahls (FLE.1) und den Phasen (ϕ.2, ..., ϕ.N) der anderen N-1 elementaren Laserstrahlen (FLE.2, ..., FLE.N) erhalten ist.

10. Verfahren nach einem der Ansprüche 8 oder 9,
**dadurch gekennzeichnet, dass** die N elementaren Laserstrahlen (FLE.1, FLE.2, ..., FLE.N) jeweils von den Verstärkermedien (4.1, 4.2, ..., 4.N) durch Verstärkung von mindestens einem Teil ihres Eigenrauschens in dem Laseroszillators (1) erzeugt sind.

11. Laseroszillator (1), der geeignet ist, einen Satz von N elementaren Laserstrahlen (FLE.1, FLE.2, ..., FLE.N) zu erzeugen, um sie später zu bündeln, um einen Laserstrahl (FL) zu bilden, wobei N eine ganze Zahl ist, die mindestens gleich 2 ist, wobei der Oszillator (1) Anpassungsmittel (6, 4.1, 4.2, ..., 4.N, 7.1, 7.2, ..., 7.N, 6, 4.1, 4.2,..., 4.N, 9.1, 9.2, ..., 9.N) der Phase jedes elementaren Laserstrahls aufweist, so dass die N elementaren Laserstrahlen für ihre weitere Bündelung in Phase sind,
**dadurch gekennzeichnet, dass** die Anpassungsmittel mindestens Folgendes aufweisen:
- ein optisches Filterelement durch Phasenkontrast (11), auf das mindestens ein Teil (FC.1, FC.2, ..., FC.N) jedes elementaren Laserstrahls gerichtet ist, so dass der Abstand zwischen der Phase (ϕ.1) eines einzelnen elementaren Laserstrahles (FLE.1) und den Phasen (ϕ.2, ..., ϕ.N) der anderen N-1 elementaren Laserstrahlen (FLE. 2, ..., FLE.N) in Lichtintensitätsniveau (ΔI.1) umgewandelt ist;
- Mittel (7.1, ..., 7.N), um das so erhaltene Lichtintensitätsniveau (ΔI.1) in Phasenverschiebung (Δϕ.1) umzuwandeln; und
- Mittel, um die so erhaltene Phasenverschiebung (Δϕ.1) an dem einzelnen elementaren Laserstrahl (FLE.1) anzulegen, um den Abstand zwischen der Phase (ϕ.1) des einzelnen elementaren Laserstrahls (FLE.1) und den Phasen (ϕ.2, ..., ϕ.N) der anderen N-1 elementaren Laserstrahlen (FLE.2, ..., FLE.N) zu kompensieren.

## Claims

1. Method for generating a laser beam (FL), in which :
- a set of N elementary laser beams (FLE.1, FLE.2, ..., FLE.N) is generated from a laser oscillator (1), N being an integer greater than or equal to 2 ;
- within said laser oscillator, the phase (ϕ.1, ϕ.2, ..., ϕ.N) of each of the N elementary laser beams is adjusted so that said elementary laser beams are in phase ; and
- said N elementary laser beams are subsequently aggregated so as to form the laser beam (FL),
wherein, so as to adjust the phase of each of the N elementary laser beams :
- the difference between the phase (ϕ.1) of an individual elementary laser beam (FLE.1) and the phases (ϕ.2, ..., ϕ.N) of the other N-1 elementary laser beams (FLE.2, ..., FLE.N) is converted into a luminous intensity level (ΔI.1), by means of at least one optical filtering by phase contrast element (11) to which at least part (FC.1, FC.2, ..., FC.N) of each elementary laser beam is directed ;
- the luminous intensity level (ΔI.1) thus obtained is converted into a phase shift (Δϕ.1) ; and
- the phase shift (Δϕ.1) thus obtained is applied to said individual elementary laser beam (FLE.1) so as to compensate said difference between the phase (ϕ.1) of said individual elementary laser beam (FLE.1) and the phases (ϕ.2, ..., ϕ.N) of said other N-1 elementary laser beams (FLE.2, ..., FLE.N).

2. Method according to claim 1, **characterized in that** the optical filtering element (11) is arranged so as to apply differential attenuation (ΔI.1, ΔI.2, ..., ΔI.N) to each elementary laser beam (FLE.1, FLE.2, ..., FLE.N) as a function of the difference between the phases (ϕ.1, ϕ.2, ..., ϕ.N) of said beams.

3. Method according to either claim 1 or claim 2, **characterized in that** the phase (ϕ.1, ϕ.2, ..., ϕ.N) of each elementary laser beam (FLE.1, FLE.2, ..., FLE.N) is adjusted iteratively every successive time said elementary laser beam passes within the laser oscillator (1).

4. Method according to any one of claims 1 to 3, **characterized in that** a plurality of optical elements (7.1, 7.2, ..., 7.N) having non-linear properties are arranged within the laser oscillator (1) so as to convert, in the phase shift (Δϕ.1), at least part of the luminous intensity level (ΔI.1) obtained from the difference between the phase (ϕ.1) of an individual elementary laser beam (FLE.1) and the phases (ϕ.2, ..., ϕ.N) of the other N-1 elementary laser beams (FLE.2, ..., FLE.N).

5. Method according to any one of claims 1 to 4, **characterized in that** at least N light guide means (9.1, 9.2, ..., 9.N) are arranged between the ends of the laser oscillator (1), on the path of the N elementary laser beams (FLE.1, FLE.2, ..., FLE.N) respectively, so that said N elementary laser beams pass within the laser oscillator (1) a number of times in succession, in a single direction (F3) along a loop.

6. Method according to claim 5, **characterized in that** the light guide means (9.1, 9.2, ..., 9.N) are non-linear optical fibres, arranged so as to convert, in the phase shift (Δϕ.1), at least part of the luminous intensity level (1.1) obtained from the difference (Δϕ.1) between the phase (ϕ.1) of an individual elementary laser beam (FLE.1) and the phases (ϕ.2, ..., ϕ.N) of the other N-1 elementary laser beams (FLE.2, ..., FLE.N).

7. Method according to any claims 1 to 4, **characterized in that** at least two reflectors (3A, 3B) are arranged at the ends of the laser oscillator (1) so that the N elementary laser beams (FLE.1, FLE.2, ..., FLE.N) pass within the laser oscillator (1) a number of times in succession in two opposite directions (F1, F2), by multiple reflections on said reflectors.

8. Method according to any one of the preceding claims, **characterized in that** a plurality of amplification media (4.1, 4.2, ..., 4.N) are arranged in parallel within the laser oscillator (1) so that the N elementary laser beams (FLE.1, FLE.2, ..., FLE.N) are generated by crossing respectively said amplification media.

9. Method according to claim 8, **characterized in that** the amplification media (4.1, 4.2, ..., 4.N) have non-linear gains so as to convert, in the phase shift (Δϕ.1), at least part of the luminous intensity level (ΔI.1) obtained from the difference (ϕ.1) between the phase (ϕ.1) of an individual elementary laser beam (FLE.1) and the phases (ϕ.2, ..., ϕ.N) of the other N-1 elementary laser beams (FLE.2, ..., FLE.N).

10. Method according to either claim 8 or claim 9, **characterized in that** the N elementary laser beams (FLE.1, FLE.2, ..., FLE.N) are generated respectively from amplification media (4.1, 4.2, ..., 4.N) by amplifying at least part of the intrinsic noise thereof within the laser oscillator (1).

11. Laser oscillator (1) which can generate a set of N elementary laser beams (FLE.1, FLE.2, ..., FLE.N) so as subsequently to aggregate them to form a laser beam (FL), N being an integer greater than or equal to 2, said oscillator (1) comprising means (6, 4.1, 4.2, ..., 4.N, 7.1, 7.2, ..., 7.N ; 6, 4.1, 4.2, ..., 4.N, 9.1, 9.2, ..., 9.N) for adjusting the phase of each elementary laser beams so that said N elementary laser beams are in phase for the subsequent aggregation thereof,
**characterized in that** said adjustment means comprise at least :
- one optical filtering by phase contrast element (11), to which at least part (FC.1, FC.2, ..., FC.N) of each elementary laser beam is directed, so as to convert the difference between the phase (ϕ.1) of an individual elementary laser beam (FLE.1) and the phases (ϕ.2, ..., ϕ.N) of the other N-1 elementary laser beams (FLE.2, ..., FLE.N) into a luminous intensity level (ΔI.1) ;
- means (7.1, ..., 7.N) for converting the luminous intensity level (ΔI.1) thus obtained into a phase shift (Δϕ.1) ; and
- means for applying to said elementary laser beam (FLE.1) the phase shift (Δϕ.1) thus obtained, so as to compensate said difference between the phase (ϕ.1) of said individual elementary laser beam (FLE.1) and the phases (ϕ.2, ..., ϕ.N) of said other N-1 elementary laser beams (FLE.2, ..., FLE.N).
